# EUROPÄISCHE PATENTANMELDUNG

(11) **EP 2 597 201 A1**
(43) Veröffentlichungstag der Anmeldung: **29.05.2013**
(21) Anmeldenummer: 12006496.9
(22) Anmeldetag: 17.09.2012
(51) Int. Cl.: E02B 9/04

(54) **Verfahren zur Regelung des Strömungsverhaltens von Flüssen**

(30) Priorität: 28.11.2011 DE 102011119479
(71) Anmelder: RWE Technology GmbH, 45128 Essen (DE)
(72) Erfinder: Thiele, Frank, 45721 Haltern am See (DE); Staubert, Mark, 45359 Essen (DE); Heinen, Martin, 41189 Mönchengladbach (DE); Brauer, Frank, 44577 Castrop-Rauxel (DE)
(74) Vertreter: polypatent

(57) **Zusammenfassung**

Die Erfindung betrifft ein Verfahren zur Regelung der Fließgeschwindigkeit von Fließgewässern, insbesondere von natürlichen Fließgewässern unter Verwendung wenigstens einer Buhne (4) und wenigstens einer hydroelektrischen Einrichtung, wobei mittels der hydroelektrischen Einrichtung an der Buhne (4) auftretende Wasserverwirbelung und/oder die erhöhte Strömungsgeschwindigkeit an dem Buhnenkopf (5) zur Stromerzeugung genutzt wird.

## Beschreibung

Die Erfindung betrifft ein Verfahren zur Regelung des Strömungsverhaltens von Flüssen sowie ein Kleinwasserkraftwerk.

Die Nutzung der Strömungsgeschwindigkeit aus Fließgewässern zur Erzeugung elektrischer Energie ist grundsätzlich bekannt. In der Regel werden hierzu entsprechende Stauanlagen in den Fließgewässern oder Leitwerke für die Anströmung entsprechender Turbinen benötigt.

Aus der WO 03/054387 A1 ist beispielsweise ein Verfahren und eine Anlage zum Regeln des Pegelstands einer Stauanlage bekannt, bei welchem eine Vielzahl von Turbinen-Generatoreinheiten oder Turbinen-Generatormodulen in eine Wehranlage integriert wird. Der Durchfluss durch diese Turbinen-Generatoreinheiten oder Turbinen-Generatormodule wird dazu verwendet, den Pegelstand in einer Stauanlage durch gezieltes Zu- und Wegschalten von einzelnen oder mehreren Turbinen-Generatoreinheiten oder Turbinen-Generatormodulen zu regeln.

Aus der europäischen Patentveröffentlichung EP 1 548 276 A1 ist ein Laufwasserkraftwerk bestehend aus einer Turbine und Wehren zur Gewinnung elektrischer Energie aus fließenden Gewässern und Tidengewässern bekannt. Das Laufwasserkraftwerk besteht aus einer Radialturbine, einem beweglichem Mittelwehr und zwei festen Seitenwehren. Über die gesamte Länge der Gewässer werden, abhängig vom Gefälle, die Anlagen in unterschiedlichen Abständen eingebaut und nutzen jeweils einen zulässigen Teil des Gewässerbettes als Stauraum. Jedes dieser Kraftwerke erzeugt im Bett des Gewässers seine eigene Stauhöhe.

Die vorstehend beschriebenen Einrichtungen beziehungsweise Kleinkraftwerke erfordern erhebliche bauliche Maßnahmen in Fließgewässern, die insgesamt Einfluss auf die Strömungsgeschwindigkeit im Fließgewässer nehmen und aufwendig zu erstellen sind.

Der Erfindung liegt die Aufgabe zugrunde, ein Verfahren zur Regelung des Strömungsverhaltens von Flüssen sowie Kleinwasserkraftwerke bereitzustellen, die insbesondere verhältnismäßig einfach zu errichten sind, keinen allzu hohen zusätzlichen baulichen Aufwand erfordern und insbesondere dazu geeignet sind, in den Lauf von natürlichen Fließgewässern integriert zu werden.

Die Aufgabe wird gelöst durch ein Verfahren zur Regelung des Strömungsverhaltens von Fließgewässern, insbesondere von natürlichen Flüssen, unter Verwendung wenigstens einer Buhne und wenigstens einer hydroelektrischen Einrichtung, wobei mittels der hydroelektrischen Einrichtung die an der Buhne auftretende Wasserverwirblung und/oder die erhöhte Strömungsgeschwindigkeit an dem Buhnenkopf zur Stromerzeugung genutzt wird.

Buhnen aus Holz, Pfählen oder Beton oder in Form von einer Stahlspundwand, insbesondere in Fließgewässern dienen in erster Linie dem Uferschutz. Die Regulierung der Fließgeschwindigkeit des Gewässers dient dazu, eine Verschlickung oder Versandung mäandrierender Fließgewässer zu vermeiden und die Wassertiefe über den verbleibenden Querschnitt des Fließgewässers zu erhöhen, und zwar in dem der hydraulisch wirksame Abflussquerschnitt eingeengt wird und die Fließgeschwindigkeit in dem verbleibenden Querschnitt des Fließgewässers erhöht wird. Hierdurch erfolgt eine geringfügige Aufstauung des verbleibenden Querschnitts. Zwischen einzelnen Buhnen oder Buhnenfeldern entstehen Stillwasserzonen. An den Buhnenköpfen erhöht sich die Fließgeschwindigkeit des Gewässers besonders stark.

Der Erfindung liegt die Erkenntnis zugrunde, dass an solche Buhnen, wenn sie als Uferschutz oder zur Strömungsregulierung erforderlich sind, die an den Buhnenköpfen entstehende Wirbelströmung im Wesentlichen nicht genutzt wird.

Die Erfindung kann daher dahingehend zusammengefasst werden, dass die erhöhte Strömungsgeschwindigkeit im Bereich der Buhnenköpfe und/oder die dort abreißende Wirbelströmung besonders geschickt unter Verwendung wenigstens einer hydroelektrischen Einrichtung in elektrischen Strom umgesetzt wird. Die Buhnen können in der Art modifiziert werden, dass der gewünschte Strömungswiderstand durch eine in die Buhne integrierte Strömungskraftmaschine eingestellt wird. Im Idealfall kann eine in Ufernähe verankerte Strömungsmaschine ohne Buhnenintegration die erforderliche Strömungskorrektur bewirken. Des Weiteren können bestehende Buhnen derart modifiziert werden, dass sie für Strömungsarbeitsmaschinen verwertbare Wasserenergie bereitstellen.

Als hydroelektrische Einrichtung kann beispielsweise wenigstens eine als Radialturbine ausgebildete Turbine Anwendung finden. Die Einrichtung in Form von tiefschlächtigen oder unterschlächtigen Rädern gekoppelt mit einer Generatoreinheit ist für eine solche Anwendung geeignet.

Die der Erfindung zugrunde liegende Aufgabe wird weiterhin durch ein Kleinwasserkraftwerk an einem Fließgewässer, insbesondere einem natürlichen Fließgewässer, umfassend wenigstens eine sich etwa quer zur Strömungsrichtung des Fließgewässers erstreckende Buhne und wenigstens eine hydroelektrische Einrichtung gelöst, die in einer durch die Buhne erzeugten Wirbelzone des Fließgewässers angeordnet ist.

Als hydroelektrische Einrichtung kann wenigstens eine als Radialturbine ausgebildete Turbine vorgesehen sein.

Unter Turbinen im Sinne der vorliegenden Anmeldung ist eine Einheit umfassend einen Läufer und einen Generator (Turbinen-Generatoreinheit) zu verstehen.

Der besondere Vorzug des Kleinwasserkraftwerks gemäß der Erfindung ist darin zu sehen, dass dieses kein Leitwerk und auch keine zusätzliche Staueinrichtungen benötigt.

Insbesondere die Abwesenheit von Leitwerken dient dazu, einen nicht gewünschten Fischschlag zu vermeiden.

Bei einer vorteilhaften Variante der Erfindung ist vorgesehen, dass die Turbine wenigstens einen sich etwa senkrecht zur Strömungsrichtung erstreckenden Läufer aufweist. Dieser Läufer hat zweckmäßiger Weise eine sich etwa radial erstreckende Beschaufelung, so dass der Läufer tangential von der Wirbelströmung im Fließgewässer mitgenommen wird.

Wie vorstehend bereits erwähnt, ist zweckmäßigerweise vorgesehen, dass die Turbine einen Läufer ohne Leitwerk umfasst.

Bei einer besonders vorteilhaften Ausgestaltung des Kleinwasserkraftwerks gemäß der Erfindung ist vorgesehen, dass die Turbine schwimmend aufgehängt ist. Die Turbine kann beispielsweise an einer Buhne aufgehängt beziehungsweise vertäut sein. Auf diese Art und Weise können beispielsweise in Buhnenfeldern von Fließgewässern eine Vielzahl von Turbinen-Generatoreinheiten angeordnet sein. Diese sind zweckmäßigerweise dabei jeweils in den Bereichen einer erhöhten Wirbelströmung angeordnet.

Grundsätzlich kann ein Kleinwasserkraftwerk im Sinne dieser Erfindung auch eine schwimmende Turbine umfassen, die an einer Uferböschung eines Fließgewässers aufgehängt ist und in einem Bereich erhöhter Strömungsgeschwindigkeit des Gewässers gehalten wird.

In der Buhne kann wenigstens ein Strömungsprofil vorgesehen sein, das eine Wirbelbildung und/oder einen Wirbelabriss am Buhnenkopf begünstigt.

Zweckmäßigerweise sind die betroffenen Buhnen leicht gegen die Strömungsrichtung geneigt angeordnet. Die Turbinen-Generatoreinheiten können beispielsweise an den Buhnen in Schwimmkäfigen oder an anderen geeigneten Auftriebskörpern vertäut sein, wobei in einer vorteilhaften Ausgestaltung der erfindungsgemäßen Anordnung die Läufer der Turbinen-Generatoreinheiten sich etwa bis zur Wasserlinie erstrecken.

Die Erfindung wird nachstehend anhand eines in den Zeichnungen dargestellten Ausführungsbeispiels erläutert:

Es zeigen:
- Fig. 1: eine schematische Darstellung eines mäandrierenden natürlichen Fließgewässers,
- Fig. 2: eine schematische Darstellung, die die Wirbelbildung im Bereich einer Buhne verdeutlicht,
- Fig. 3: eine schematische Ansicht eines erfindungsgemäßen Kleinwasserkraftwerks,
- Fig. 4: eine Schnittansicht entlang der Linien IV-IV in Fig. 3 und
- Fig. 5: eine schematische Ansicht einer in die Strömung eines Fließgewässers abgehängten Turbinen-Generatoreinheit.

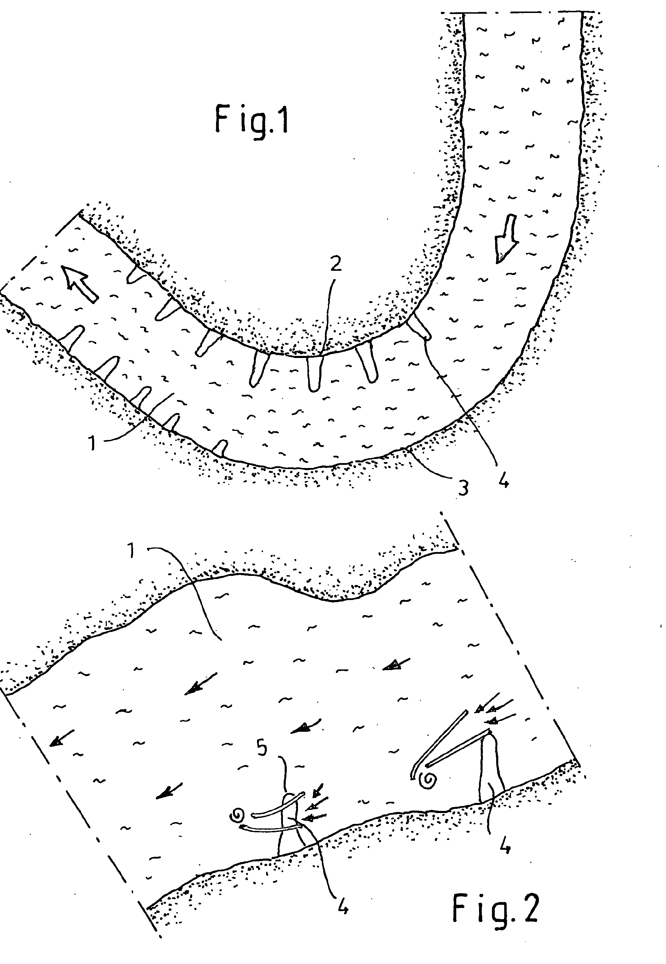

Figur 1 zeigt ein natürliches Fließgewässer 1 im Bereich einer Mäanderschleife, wobei der Gleithang mit 2 bezeichnet ist und der Prallhang mit 3. Im Bereich des Prallhangs 3 besitzt das Fließgewässer 1 üblicherweise eine stärkere Strömung, in Folge dessen findet dort eine Erosion im Uferbereich statt, im Bereich des Gleithangs 2 ist die Strömungsgeschwindgkeit geringer, in Folge dessen findet dort Sedimentation statt. Im Bereich des Gleithangs 2 sind eine Vielzahl von Buhnen 4 vorgesehen, die sich etwa senkrecht zur Strömungsrichtung des Fließgewässers 1 erstrecken. In diesem Bereich des Fließgewässers 1 dienen die Buhnen 4 dazu, eine Verschlickung/Versandung zu vermeiden oder eine Verengung des hydraulischen Restquerschnitts des Fließgewässers 1 in diesem Bereich zu erzielen.

Figur 2 zeigt schematisch die Anströmung einer Buhne 4 im Bereich des Buhnenkopfs 5, wobei sich im Bereich des Buhnenkopfs 5 eine erhöhte Strömungsgeschwindigkeit des Fließgewässers 1 einstellt und hinter dem Buhnenkopf 5 eine Verwirblung 6 entsteht. Diese Verwirblung löst sich flussabwärts von den Buhnenkopf 5 ab, ähnlich einer Wirbelschleppe an einer Flugzeugtragfläche.

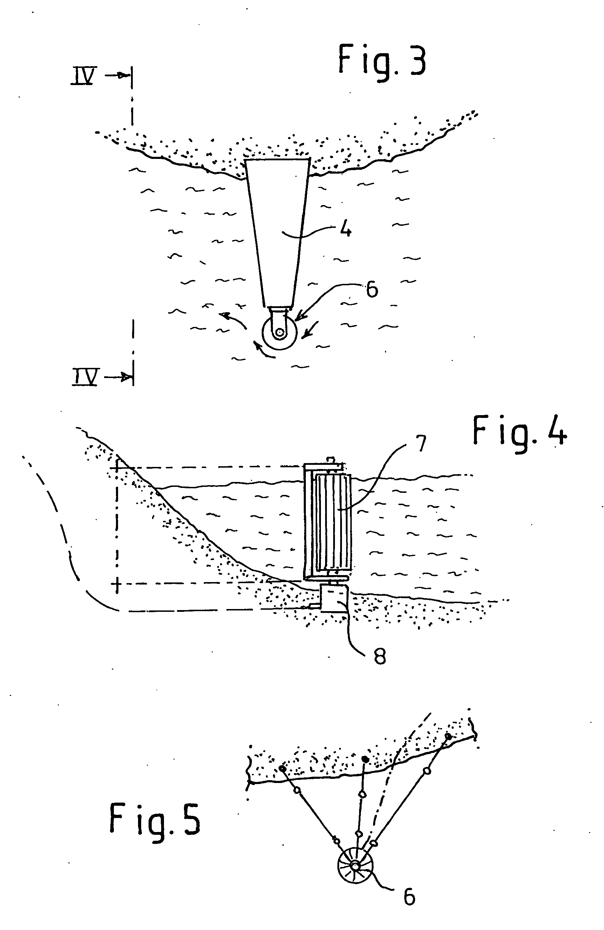

Es wird nunmehr Bezug genommen auf die Figuren 3-5. Die in Figur 3 dargestellte Buhne 4 ist beispielsweise als strömungstechnisch optimiertes hydraulisch wirksames Profil ausgebildet, an dem Buhnenkopf 5 ist eine Radialturbine 6 angeordnet, deren Läufer 7 sich etwa senkrecht zur Fließrichtung des Gewässers erstreckt. Der Läufer ist als offenes Laufrad ohne ein Leitwerk ausgebildet. Der Läufer treibt einen nur schematisch dargestellten Generator 8, der an einer nicht dargestellte Umspannstation angeschlossen ist. Bei einer konzentrierten Anordnung von Buhnen 4 in Buhnenfeldern können diese jeweils mit einer Radialturbine 6 versehen sein, wobei mehrere Radialturbinen 6 (Turbinen-Generatoreinheiten) jeweils an eine Umspannstation angeschlossen sind.

Bei dem Ausführungsbeispiel gemäß Figuren 3 und 4 ist die Radialturbine 6 starr an der Buhne 4 befestigt. Alternativ kann vorgesehen sein, die Radialturbine 6 an der Buhne 4 beispielsweise auf der Leeseite des Buhnenkopfs 5 an der Buhne 4 zu vertäuen oder anzuketten wie dies in Figur 5 schematisch dargestellt ist. Die Radialturbine 6 ist in diesem Falle als schwimmende Einrichtung ausgebildet. Nicht dargestellt sind etwa benötigte Auftriebskörper an der Turbinen-Generatoreinheit.

### Bezugszeichenliste

- 1: Fließgewässer
- 2: Gleithang
- 3: Prallhang
- 4: Buhnen
- 5: Buhnenkopf
- 6: Radialturbine
- 7: Läufer
- 8: Generator

## Patentansprüche

1. Verfahren zur Regelung der des Strömungsverhaltens von Fließgewässern, insbesondere von natürlichen Fließgewässern unter Verwendung zumindest einer Buhne (4) und wenigstens einer hydroelektrischen Einrichtung, wobei mittels der hydroelektrischen Einrichtung die an der Buhne (4) auftretende Wasserverwirblung und/oder die erhöhte Strömungsgeschwindigkeit an dem Buhnenkopf (5) zur Stromerzeugung genutzt wird.

2. Verfahren nach Anspruch 1,
**dadurch gekennzeichnet, dass**
als hydroelektrische Einrichtung wenigstens eine als Radialturbine (6) ausgebildete Turbine Anwendung findet.

3. Kleinwasserkraftwerk an einem Fließgewässer (1), umfassend eine sich etwa quer zur Strömungsrichtung des Fließgewässers (1) erstreckende Buhne (4) und wenigstens eine hydroelektrische Einrichtung, die in einer durch die Buhne (4) erzeugten Wirbelzone des Fließgewässers (1) angeordnet ist.

4. Kleinwasserkraftwerk nach Anspruch 3,
**dadurch gekennzeichnet, dass**
als hydroelektrische Einrichtung wenigstens eine als Radialturbine (6) ausgebildete Turbine vorgesehen ist.

5. Kleinwasserkraftwerk nach Anspruch 4,
**dadurch gekennzeichnet, dass**
die Turbine wenigstens einen sich etwa senkrecht der Strömungsrichtung des Fließgewässers (1) erstreckenden Läufer (7) aufweist.

6. Kleinwasserkraftwerk nach einem der Ansprüche 3-5,
**dadurch gekennzeichnet, dass**
die Turbine einen Läufer (7) ohne Leitwerk umfasst.

7. Kleinwasserkraftwerk nach einem der Ansprüche 3-6,
**dadurch gekennzeichnet, dass**
die Turbine schwimmend aufgehängt ist.

8. Kleinwasserkraftwerk nach einem der Ansprüche 3-7,
**dadurch gekennzeichnet, dass**
die Turbine an der Buhne (4) aufgehängt oder vertäut ist.

9. Kleinwasserkraftwerk nach einem der Ansprüche 3-8,
**dadurch gekennzeichnet, dass**
an der Buhne (4) wenigstens ein Strömungsprofil vorgesehen ist oder die Buhne (4) ein Strömungsprofil aufweist, welches eine Wirbelbildung begünstigt.
